(19) **Europäisches Patentamt European Patent Office Office européen des brevets**

(11) **EP 2 010 365 B1**

(12) **EUROPEAN PATENT SPECIFICATION**

(45) Date of publication and mention
of the grant of the patent:
**30.11.2011 Bulletin 2011/48**

(21) Application number: **07703733.1**

(22) Date of filing: **09.01.2007**

(51) Int Cl.:
*B29C 44/60* (2006.01)   *G01G 17/04* (2006.01)
*G01N 9/02* (2006.01)   *G01N 9/04* (2006.01)

(86) International application number:
**PCT/EP2007/050183**

(87) International publication number:
**WO 2007/122019 (01.11.2007 Gazette 2007/44)**

(54) **METHOD FOR CONTROLLING THE FORMATION OF CLOSED-CELL EXPANDED POLYMERS**

VERFAHREN ZUR STEUERUNG DER BILDUNG VON GESCHLOSSENZELLIGEN GESCHÄUMTEN POLYMEREN

PROCEDE DE REGULATION DE LA FORMATION DE POLYMERES EXPANSES A CELLULES FERMEES

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.04.2006 IT MO20060131**

(43) Date of publication of application:
**07.01.2009 Bulletin 2009/02**

(73) Proprietor: **Duna-Corradini S.p.A.**
**41019 Soliera MO (IT)**

(72) Inventor: **BURANI, Eugenio**
**42100 Reggio Emilia (IT)**

(74) Representative: **Modiano, Micaela Nadia et al**
**Modiano Gardi Patents SAS**
**Via Meravigli 16**
**20123 Milano (IT)**

(56) References cited:
**EP-A- 0 574 051       EP-A- 1 148 329**
**WO-A-99/04227        DE-A1- 19 810 092**
**JP-A- 4 020 852       US-A- 6 110 982**
**US-A1- 2006 029 675**

**Description**

<u>Technical Field</u>

The present invention relates to a method for controlling the process for the formation of closed-cell expanded polymers, particularly polyurethane foams, according to claim 1.

<u>Background Art</u>

Many synthetic expanded polymers are known and include, merely by way of non-limiting example, expanded polyurethanes or polyurethane foams.

Polyurethanes in general are synthetic polymeric materials which derive from the reaction between two basic components: isocyanates and alcohols such as polyols.

The characteristics and properties of polyurethanes depend both on the quality of the two basic components and on any additives and/or catalysts used; these last in fact influence both the synthesis reaction and the characteristics of the end product.

It is therefore possible to have a broad range of polyurethane products having different physical characteristics and suitable for different applications; merely by way of example, mention is made of textile fibers, adhesives, flexible foams which have an open-cell structure and are used for example for the paddings of pillows, mattresses and seats of vehicles, semirigid foams used for example as protective coverings and paddings of internal parts of vehicles, rigid foams which have a closed-cell structure and are used as heat insulators in the field of civil and industrial buildings or in the transport sector, and elastomers.

With particular reference to expanded polyurethanes or polyurethane foams, their formation process is based on two mechanisms: the chemical polymerization reaction between isocyanate and polyol and the chemical or physical reaction for the formation of a swelling gas which is responsible for the expanded or foam-like structure.

Formation of the swelling gas by chemical means is based on the reaction between isocyanate and water, which is added to the polyols, with generation of gaseous carbon dioxide. Formation of the swelling gas by physical means is based on the vaporization, by way of the heat generated by the exothermic polymerization reaction of the two base components, of a swelling agent which is chemically inert, has a low boiling point and is added to the polyol.

The quality of the polyurethane foam depends on how its formation process develops. Control of the characteristic parameters of the foam formation process provides indications which are useful, for example, for assessing the behavior of such process and the way in which it is influenced by the composition of the mixture of the two base components, by the presence of additives, catalysts, swelling agents or others, or for testing the quality of the product.

During the formation of open-cell polyurethane foams, the swelling gas is released into the outside environment, with a consequent loss of mass of the foam; during the formation of closed-cell polyurethane foams, the swelling gas instead remains trapped within said cells.

Methods for controlling the process for formation of open- or closed-cell polyurethane foams are known which are based on measuring over time the increase in height of a sample of a mixture of the two base components and of any additives and/or catalysts, placed to react within a known container. During the foam formation reaction, the level of filling of the container increases until it reaches a maximum level; detection over time of this level produces a so-called height-of-growth chart, which is an indication of the behavior of the foam formation process.

In order to detect the filling level of the container continuously and independently of human factors, ultrasound sensors are used which are arranged above the container and are connected to a unit for collecting and processing the acquired data.

However, this method is not free from drawbacks, including in particular the fact that the precision of the measurements made by means of ultrasound sensors is highly influenced by the temperature; sound propagation speed in fact depends on the temperature of the transmission medium. Since the polymerization reaction is exothermic, it is therefore necessary to use simultaneously fans to dissipate the generated heat and heat probes to compensate, according to the recorded temperatures, the values detected by the level sensors.

Methods for controlling the polyurethane foam formation process are also known which are based on the detection of other characteristic parameters: the reaction temperature, viscosity, growth pressure and dielectric polarization of a sample of a mixture of basic components and of any additives and/or catalysts during their reaction.

Heat probes arranged within the sample being analyzed are used to detect the reaction temperature. This method, too, has drawbacks, including the fact that the detected values are not precise and accurate, since they are in fact heavily influenced by several factors which are difficult to control, including for example heat dissipation by the sample, the conducting capacity of the sample container, and the heat transmission properties of the sample itself.

Known control methods based on the measurement of viscosity also have the drawback of providing inaccurate measurements. It is in fact not possible to use rotary or vibration viscosimeters of the known type to detect the viscosity of a mixture during the foam formation reaction, due to the progressive increase in volume and hardening of the mixture itself. It is therefore necessary to use computational models which are based on the processing of other characteristic parameters and therefore provide only indirect measurements.

The so-called "growth pressure" is detected by using an expansion container into which the reaction components are injected; the container is then placed on a load cell suitable to detect the force applied by the foam being formed on the bottom of such container.

In order to detect dielectric polarization, which decreases over time as a consequence of the progressive immobilization of the molecules caused by the polymerization reaction, it is necessary to use appropriate sensors.

These known control methods based on detecting growth pressure and dielectric polarization also have drawbacks, among which it should be noted that they require the use of particular sensors, whose sensitivity is strongly influenced by external factors, and that it is necessary to ensure constant and complete contact of the sensors with the sample during reaction.

Finally, it is known to detect, alongside the growth height and/or dielectric constant and/or growth pressure measurements, the weight loss undergone by the sample being tested, due to the release of swelling agents and/or volatile components during the formation of open-cell foams.

Examples of devices for manufacturing foam products and of gravimetric dispensing apparatuses for dispensing paint are known from documents EP 0 574 051 A1 and WO 99/04227 A1

Disclosure of the Invention

The aim of the present invention is to solve the drawbacks described above of known control methods, by providing a method for controlling the process for the formation of closed-cell expanded polymers, particularly polyurethane foams, which allows to control simply and precisely the process for the formation of closed-cell expanded polymers, allowing in particular to determine the final density of the expanded polymer.

Within this aim, an object of the present invention is to provide a control method which allows to eliminate the use of level or temperature sensors or load cells, whose measurements, as mentioned above, depend on direct contact with the polymer being formed and are heavily influenced by external factors.

.

Another object of the present invention is to provide a control method which can be performed by using known and commonly available laboratory equipment.

Another object of the present invention is to provide a control method which is simple, relatively easy to provide in practice, safe in use, effective in operation, and has a relatively low cost.

This aim and these and other objects that will become better apparent hereinafter are achieved by the present method for controlling the process for the formation of closed-cell expanded polymers, particularly polyurethane foams, obtained by a reaction system which comprises a mixture of at least one first component and one second component in the liquid state, characterized in that it comprises the step of detecting the weight of the system during the time of reaction of the first component with the second component in order to obtain a closed-cell expanded polymer, the weight loss of the expanding system being proportional to the volume increase that it undergoes.

Brief Description of the Drawings

Further characteristics and advantages of the present invention will become better apparent from the following, detailed description of a preferred but not exclusive embodiment of a method for controlling the process for the formation of closed-cell expanded polymers, particularly polyurethane foams, according to the invention, and of an apparatus for performing the method according to the invention, which are illustrated by way of non-limiting example in the accompanying drawings, wherein:

Figures 1a-1c are schematic views of steps of the method according to the invention;

Figures 2a-2e show in succession Table 1 giving the values of weight, percentage weight loss, growth rate over time of a polyurethane foam sample, acquired and calculated with the method according to the invention as indicated in the cited Example;

Figure 3 illustrates the charts of the percentage weight loss as a function of time and of the corresponding first derivative during 5 minutes of reaction for the sample of closed-cell polyurethane foam, obtained with the method according to the invention from the data of Table 1;

Figure 4 illustrates the charts of the percentage weight loss as a function of time and of the corresponding first derivative after 15 minutes of reaction for the same sample of closed-cell polyurethane foam, obtained with the method according to the invention from the data of Table 1.

Ways of carrying out the Invention

The method according to the invention allows to control the process for the formation of closed-cell expanded polymers obtained starting from a reaction system which comprises a mixture of at least one first component and one second component in the liquid state, the mixture possibly comprising additives, such as for example expanding agents, and/or catalysts.

As is known, the formation of the expanded polymer is caused by two mechanisms: the chemical polymerization reaction between the first component and the second component, and the chemical or physical reaction for the formation of an expanding or swelling gas which is responsible for the expanded or foam-like structure.

The method according to the invention particularly but not exclusively allows to control the process for the formation of closed-cell polyurethane foams obtained from a reaction system which comprises a mixture of at least one first component, constituted by polyol, and a second component, constituted by isocyanate in the liquid state and optionally additives and/or catalysts.

The present description references the reaction product of the system constituted by the mixture of at least the first component and the second component equally as "expanded polymer" and as "foam"; it is understood in both cases that the reaction product has a closed-cell structure.

The method according to the invention is based on Archimedes' principle.

During the reaction time, the reaction system expands, increasing in volume but without losing mass, since the expanded polymer that forms is of the closed-cell type; therefore, during the reaction time the system undergoes a weight decrease which is caused by the buoyancy in air of the reaction system.

The weight reduction of the system during the reaction time is therefore proportional to the increase in volume that it undergoes.

The method according to the invention is based on calculating the percentage weight loss of the reaction system over time, on the basis of which control data which are characteristic of the process for the formation of the expanded polymer are then obtained, such as: the density of the expanded polymer after a preset reaction time, the final density of the expanded polymer, the maximum reaction rate, and expansion start and end times.

The method according to the invention comprises:

-     a step for preparing the reaction system, which is constituted by the mixture of at least one first component and one second component in the liquid state in preset quantities and by any additives and/or catalysts;
-     a step for detecting the weight of the system thus prepared during the reaction time of the first component and the second component, with the formation of a closed-cell expanded polymer, the expanding system losing weight but not mass in proportion to the volume increase that it undergoes; and
-     a step for processing the weight values detected during the reaction time, which can occur at least partially during said detection step.

The step for preparing the reaction system comprises:

-     bringing the first component and the second component to a preset initial temperature, which can vary for example between 0° and 30°C and is preferably equal to 20°C, depending on the control specifications indicated in the production specification of the product,
-     weighing, within a same chemically inert and open container, preset quantities of the first component and of the second component minus the weight of said container, the quantities or proportions of the two components and of any additives and/or catalysts being a function of the type of polymer being considered,
-     mixing the resulting mixture for a preset mixing time interval which can vary between 3 and 10 seconds.

These steps can be performed, as an alternative, with appropriate automatic dosage and mixing machines.

The detection step preferably occurs in conditions of thermal insulation of the reaction system and comprises:

-     optionally arranging the container which contains the prepared reaction mixture within a thermally insulated vessel which is open in an upper region, and
-     detecting over time the weight of the system minus the weight of the container and of the thermally insulated vessel.

Detection of the weight of the reaction system occurs continuously or discretely over time; in this last case, it occurs at preset time intervals of for example 1 second.

The step for processing the weight values of the reaction system detected over time comprises:

-     obtaining from the weight values thus detected the function that indicates the percentage weight loss of the system in relation to the reaction time and the corresponding representative chart, and

- calculating the first derivative of this function and the corresponding representative chart in relation to the reaction time, the first derivative function being representative of the reaction rate of the system.

The step for processing the acquired values further comprises calculating the maximum point of the first derivative, which is an indication of the time when the foam growth rate reaches its maximum value and begins to decrease.

This maximum point is an indication of the moment in which the viscosity of the polymer being formed predominates with respect to the thrust applied by the expanding gas.

The step for processing the acquired values further comprises obtaining the density reached by the closed-cell expanded polymer after a preset reaction time on the basis of the percentage weight loss undergone by the system in this reaction time and in particular the final density, known in the jargon as free expansion density.

In a preferred embodiment of the method according to the invention, calculation of the density reached by the expanded polymer after a preset reaction time is performed by applying the formula:

$$D = [(100 - P) * A * L] \div [P * L \div 100 * A]$$

where D is the density of the closed-cell expanded polymer reached in said reaction time, P is the percentage weight loss of the reaction system in the considered reaction time, A is the density of the air of the environment in which the reaction occurs, expressed in $kg/m^3$, L is the density of the mixture of the first component and of the second component in the liquid state, expressed in $kg/m^3$.

In particular, if the expanded polymer is polyurethane, L is equal to approximately 1200 $kg/m^3$ at the temperature of approximately 20°C.

If the reaction occurs in ambient air, A is equal to approximately 1.2 $kg/m^3$.

The formula given above derives from the assumption of the fact that the reaction system expands by increasing in volume without losing mass and loses weight as a consequence of the buoyancy that it receives from the volume of the air of the environment in which the reaction occurs, which is displaced as a consequence of said expansion.

Therefore, the density of the expanded polymer after a given reaction time is given by:

$$D = Final\ weight\ /\ Final\ volume$$

where:

$$Final\ weight = [100 - P]$$

where P is the percentage weight loss over the reaction time being considered, and

$$Final\ volume = Vi + Ve$$

where $Vi$ is the initial volume of the reaction mixture in the liquid state, i.e., $Vi = 100/L$, where L is the density of the mixture of the first component and of the second component in the liquid state expressed in $kg/m^3$, and

$Ve$ is the volume by which the initial reaction mixture in the liquid state has increased, which is obtained from the displaced volume of air of the reaction environment, i.e.:

$$Ve = P/A$$

where A is the density of the air of the reaction environment.

By replacing the expressions of *Final weight* and *Final volume* cited above in the calculation of D, the above cited calculation formula is obtained.

The person skilled in the art easily obtains the inverse formula for P (percentage weight loss) from the formula for calculating D.

For the person skilled in the art, it is evident that the method according to the invention can also be applied to reaction systems which undergo a volume reduction without mass variations. In this case, a weight increase is recorded which is proportional to the volume reduction; it is therefore simple for the person skilled in the art to compute the data related to the percentage weight increase in order to obtain the final density reached by the system after a given reaction time.

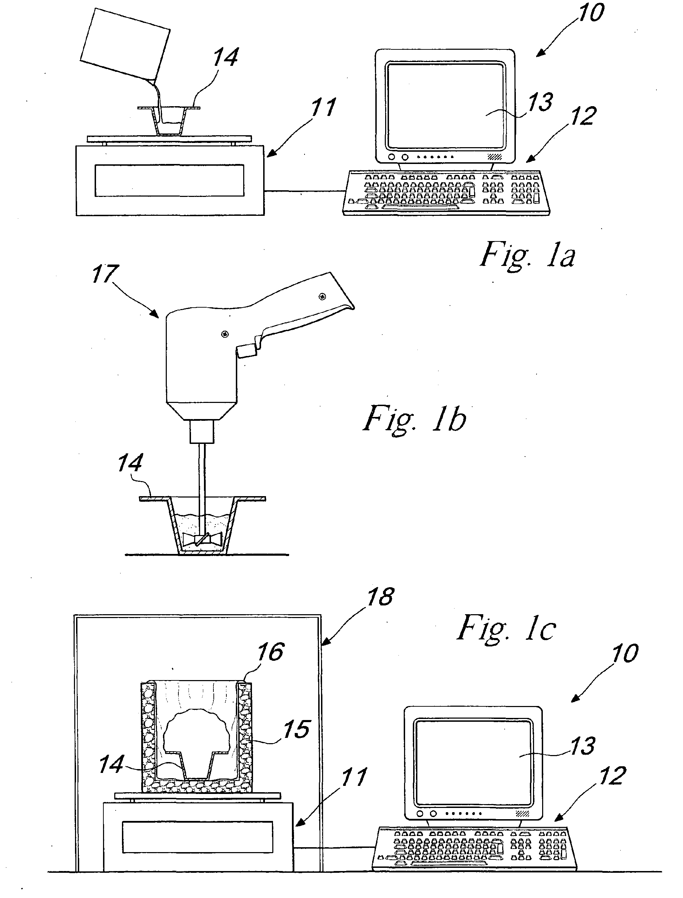

Figures 1a-1c illustrate schematically an apparatus 10 for performing the method according to the invention.

The apparatus 10 comprises means for detecting the weight of the reaction system, which are constituted by a precision balance 11 with a sensitivity on the order of 0.01 g.

The balance 11 is functionally associated with a management and control unit 12, which comprises memory means which contain instructions for performing the steps of the method according to the invention, including in particular:

- recording the weight values detected over time;
- calculating the percentage weight loss as a function of time and the corresponding chart, a function which indicates the behavior of the expansion reaction of the system;
- calculating the first derivative of the preceding function and the corresponding chart as a function of time, which is an indication of the rate of the expansion reaction of the system;
- calculating the maximum point of the first derivative;
- calculating the final density of the expanded polymer, preferably by applying the formula $D = [(100 - P) * A * L] \div [P * L \div 100 * A]$ as specified above.

Further, the unit 12 is associated with a unit 13 for displaying at least the detected and/or calculated values and the corresponding functions and with a user interface.

The apparatus 10 further comprises a chemically inert container 14, which is open upward and within which the first and second components and any additives and/or catalysts in the liquid state are weighed in the proportions or quantities indicated in the specifications of the product being considered. The container 14 is constituted by a cup made of polyethylene (PE).

The apparatus 10 also comprises a thermally insulated vessel 15, which is open in an upper region and is constituted by a rigid polyurethane cylinder within which the system is made to react. Conveniently, in order to recover the vessel 15 and use it for several analyses, its internal walls are lined with a removable protective sheet, constituted for example by a polyethylene bag 16.

Particularly but not exclusively with reference to the analysis of the process for the formation of a closed-cell expanded polyurethane, one proceeds as follows:

- the first and second components, i.e., the isocyanate and the polyol, and any additives and/or catalysts, are prepared within respective polyethylene cups and are brought to the temperature indicated in the product specifications by using thermostatic baths of a known type;
- the product identification data and the test conditions (temperature of the components, ambient pressure, preparation conditions) are entered in the unit 12;
- the container 14 is placed on the balance 11 and the balance is reset;
- the amounts of polyol, of any additives and/or catalysts, and finally of isocyanate which are prescribed are weighed within the container 14;
- the resulting mixture is mixed with the aid of an air mixing drill and paddle 17 of a known type for the prescribed time;
- the vessel 15, lined by the bag 16, is placed on the balance 11, with the container 14 which contains the mixed mixture arranged therein, and the apparatus is reset to zero;
- the weight of the system is detected at preset time intervals and for a preset time period which varies between 5 and 30 minutes.

Conveniently, work is performed in an environment which is closed by a hood 18 and the measurements are performed without suction, so as to prevent air displacements from altering the weight measurements.

Advantageously, the final foam volume produced by the sample being considered should not exceed 3 l, and therefore, if the final density of the product is indicated between 28 and 35 g/l, the amount of mixture to be analyzed should be on the order of 100 g; if instead the final density of the product is on the order of 50 g/l, the amount of mixture to be analyzed should be approximately 150 g.

The method according to the invention is illustrated merely by way of non-limiting example in the following Example.

**Example.**

A sample of polyurethane was analyzed which was constituted by a mixture comprising:

- 65 g of polyol (known as Dunapol™-C 035 OMT-polyol-batch B184) at T=20 °C; and
- 91 g of isocyanate (known as Dunapol™ A310-isocyanate) at T=20 °C; weighed in a PE cup and mixed for 5 seconds with a drill and paddle mixer, preferably of the air mixing type with a rotation rate of 1500-2000 rpm, at an atmospheric pressure of 1012 hPa.

The cup, with the prepared mixture inside it, was placed within a thermally insulated vessel constituted by a rigid polyurethane cylinder lined with a polyethylene bag on the pan of a precision balance arranged under a hood (without suction).

The weight of the reacting mixture was measured for 15 minutes at time intervals of 1 second, subtracting the weight of the vessel and the cup; the values of percentage weight loss and growth rate were obtained from the measured values.

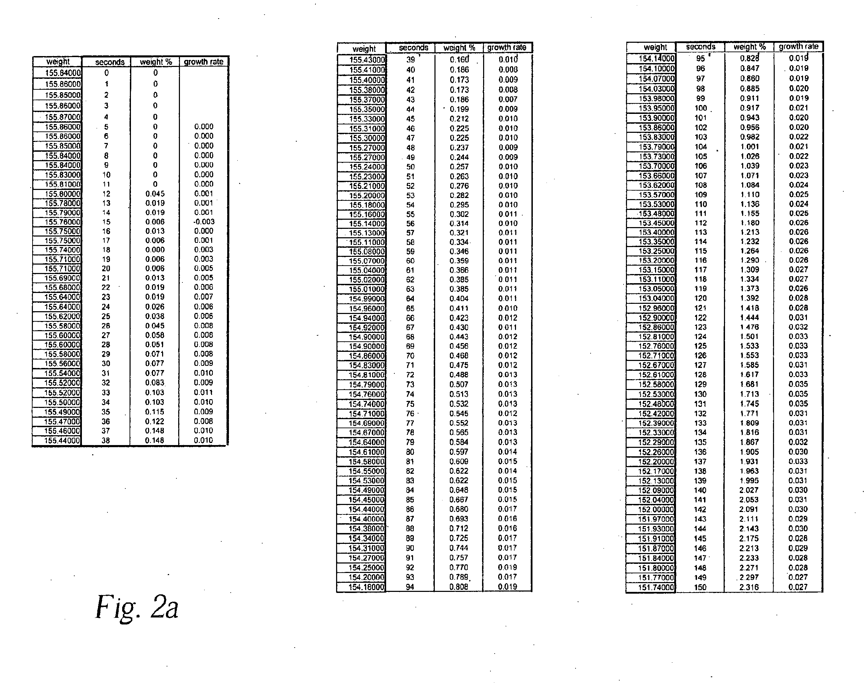

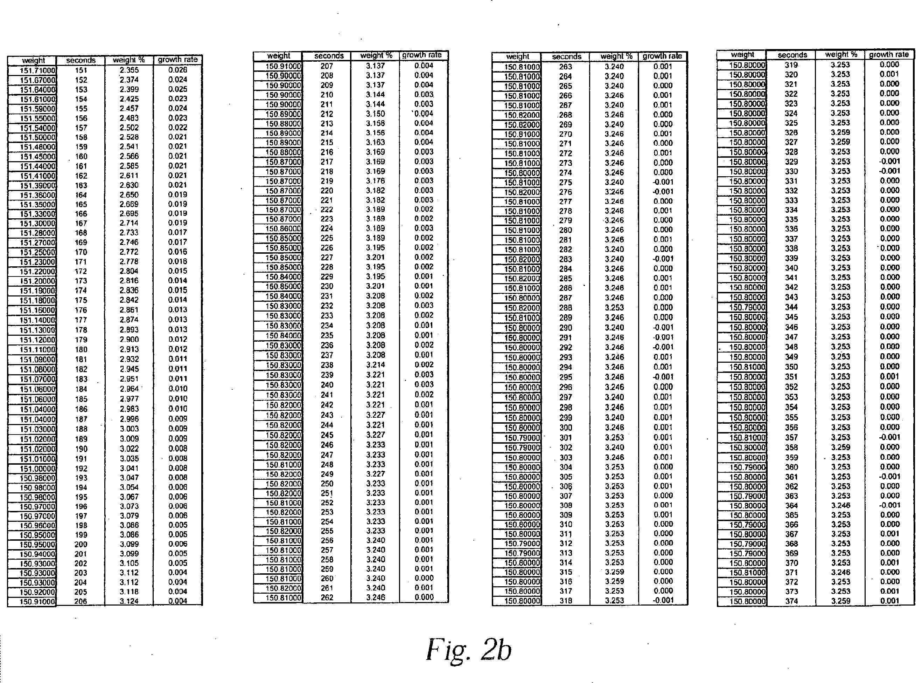

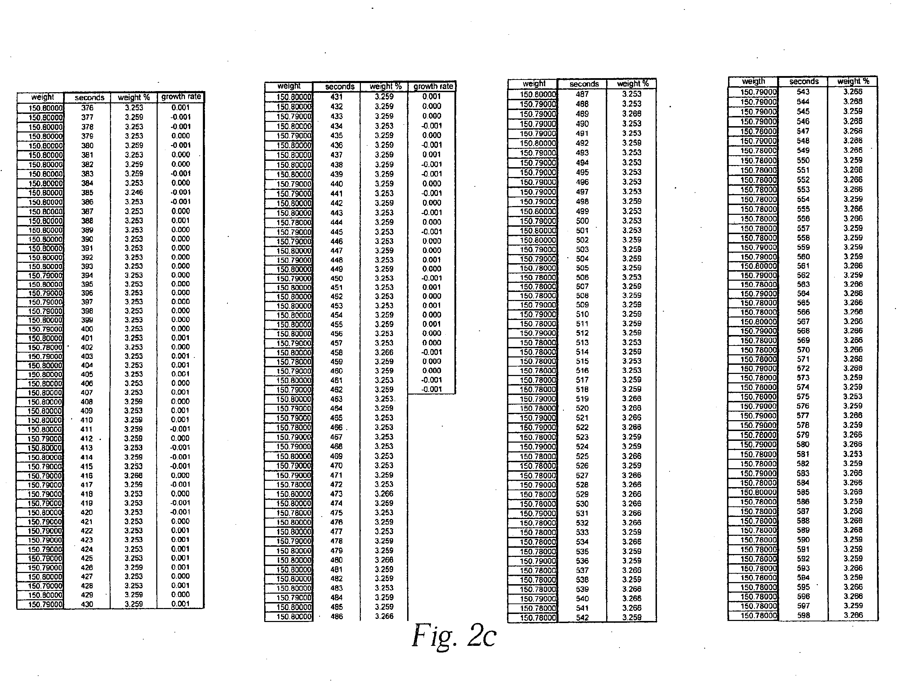

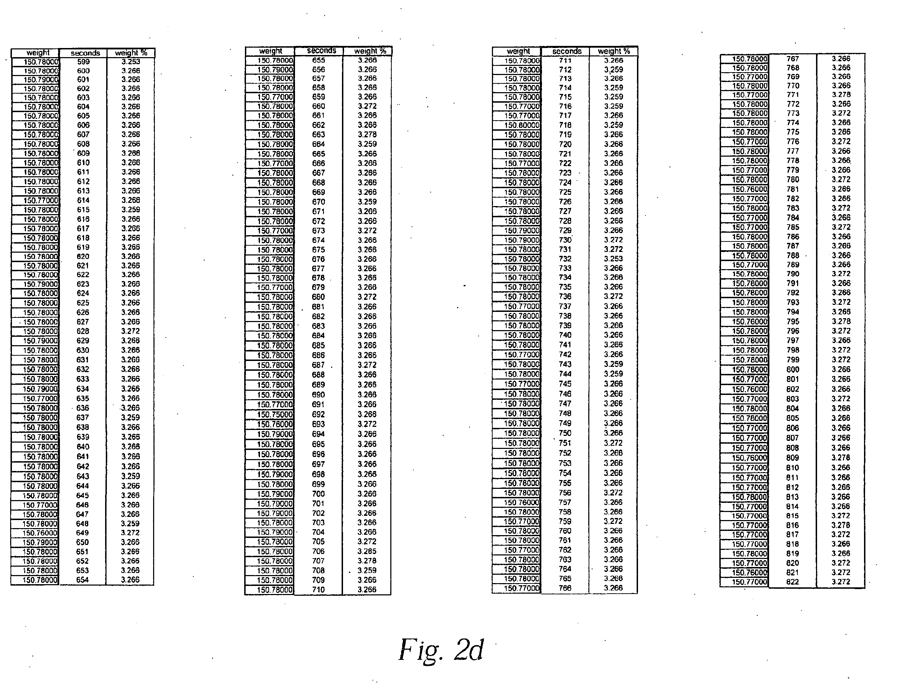

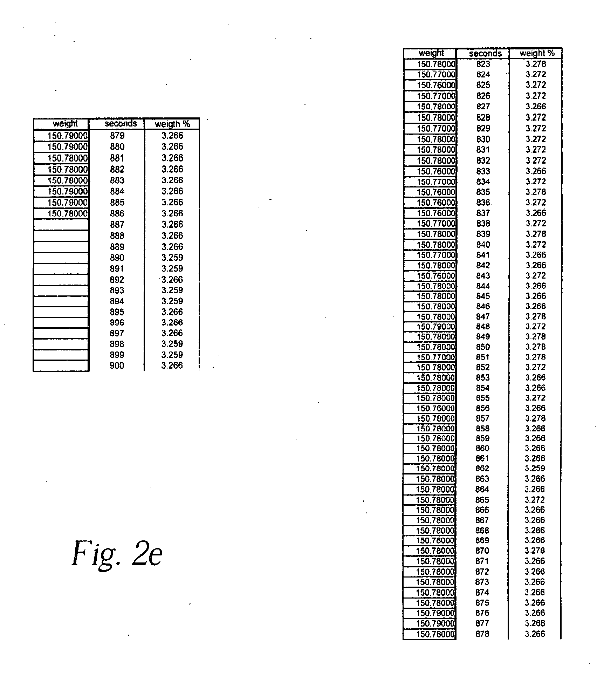

Table 1, shown in Figure 2, lists in the first column the detected weights in grams, in the second column the measurement times in seconds, in the third column the percentage weight loss, and in the fourth column the growth rate (percentage weight loss/second).

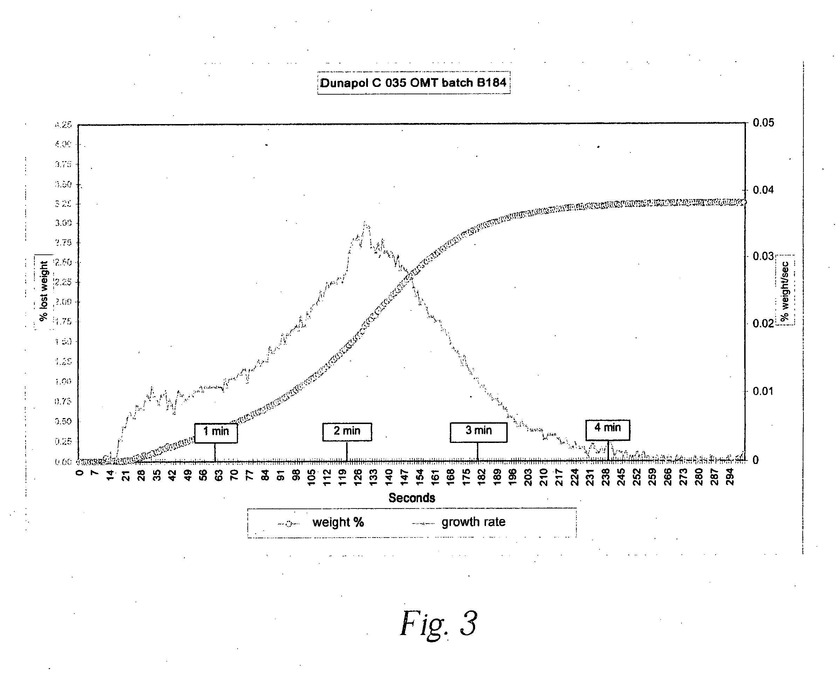

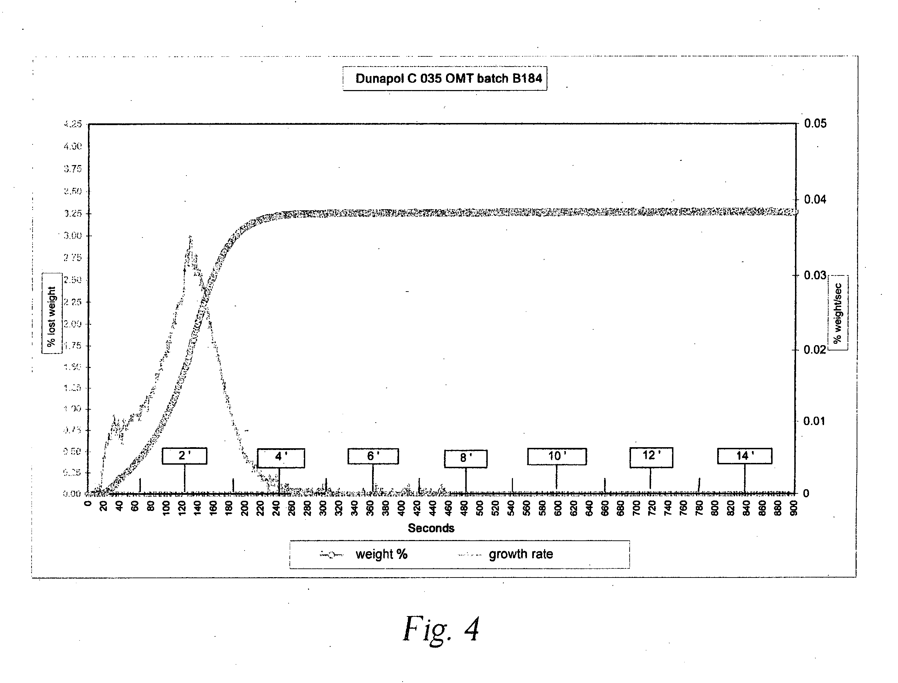

The accompanying Figures 3 and 4 plot the charts of the percentage weight loss as a function of time and of the corresponding first derivative respectively for 5 minutes and 15 minutes of reaction.

As can be seen, the percentage weight loss increases progressively and reaches a constant value (equal to approximately 3.26); the growth rate instead increases progressively until it reaches a maximum value (0.035) approximately 120-130 seconds after the beginning of the reaction and then decreases to zero.

The final density values after 10 minutes and after 15 minutes of reaction calculated with the present method are:

$$D \ (10 \ \mathrm{min}) = 34.53 \ \mathrm{kg/m}^3$$

$$D \ (15 \ \mathrm{min}) = 34.52 \ \mathrm{kg/m}^3$$

Finally, tests to validate the method according to the invention were conducted; on the basis of these tests, the relative precisions with which it is possible to calculate the values of the maximum rate time, of density after 10 minutes, after 15 minutes and after 25 minutes, were determined.

In greater detail, the validation tests were performed for two consecutive days by a same analysis technician; five tests were conducted each day. Each test was performed on a sample of polyurethane prepared by mixing:

- 41.2 g of polyol (known as Dunapol™-C 028 HO-polyol-batch 0511 B029) at T=20°C; and
- 57.82 g of isocyanate (known as Dunapol™ A310-isocyanate) at T=20°C; weighed in a PE cup and mixed for 5 seconds with a drill and paddle mixer, preferably of the air mixing type with a rotation rate of 1500-2000 rpm, at an atmospheric pressure of 1008 hPa.

The cup, with the prepared mixture inside it, was placed within a thermally insulated vessel constituted by a rigid polyurethane cylinder lined with a polyethylene bag on the pan of a precision balance arranged under a hood (without suction).

The weight of the reacting mixture was measured for 25 minutes at time intervals of 2 seconds, subtracting the weight of the vessel and the cup; the values of percentage weight loss and growth rate were obtained from the measured values.

The values of the maximum rate time (seconds) and of density ($kg/m^3$) after 10 minutes, 15 minutes and 25 minutes were then calculated and obtained with the method according to the invention for each of the five tests conducted in the two successive days, and listed in the following Table 2:

| 1st day | maximum rate | density after 10 minutes | density after 15 minutes | density after 25 minutes |
|---|---|---|---|---|
| 1st test | 88 | 28.39 | 28.30 | 28.28 |
| 2nd test | 87 | 28.73 | 28.91 | 29.05 |
| 3rd test | 88 | 28.48 | 28.51 | 28.53 |
| 4th test | 88 | 28.42 | 29.29 | 28.41 |

(continued)

| 1st day | maximum rate | density after 10 minutes | density after 15 minutes | density after 25 minutes |
|---|---|---|---|---|
| 5th test | 89 | 28.83 | 28.91 | 29.15 |
| 2nd day | | | | |
| 1st test | 85 | 28.75 | 28.62 | 28.65 |
| 2nd test | 88 | 28.82 | 28.78 | 28.72 |
| 3rd test | 88 | 28.68 | 28.72 | 28.75 |
| 4th test | 89 | 28.43 | 28.62 | 28.92 |
| 5th test | 85 | 28.57 | 28.69 | 28.84 |

Table 2

The average value (M), the standard deviation (DS), the relative standard deviation (RSD, equal to $DS*100/M$), and the relative precision (equal to $RSD*2.262$) were obtained from the values listed above by means of formulas which are known to the person skilled in the art; the resulting values are given in the following Table 3.

Table 3

| | maximum rate | density after 10 minutes | density after 15 minutes | density after 25 minutes |
|---|---|---|---|---|
| Average | 87.5 | 28.61 | 28.64 | 28.73 |
| Standard deviation | 1.434 | 0.172 | 0.221 | 0.275 |
| Relative standard deviation | 1.639 | 0.602 | 0.773 | 0.956 |
| Relative precision | ±3.7% | ±1.4% | ±1.7% | ±2.1% |

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. MO2006A000131 from which this application claims priority are incorporated herein by reference.

**Claims**

1. A method for controlling the process for the formation of closed-cell expanded polymers, particularly polyurethane foams, obtained by a reaction system which comprises a mixture of at least one first component and one second component in the liquid state, **characterized in that** it comprises the step of detecting the weight of said system during the time of reaction of said first component with said second component in order to obtain a closed-cell expanded polymer, the weight loss of said expanding system being proportional to the volume increase that it undergoes.

2. The method according to claim 1, **characterized in that** said detection occurs continuously or discretely over time.

3. The method according to claim 2, **characterized in that** said detection occurs discretely at time intervals on the order of 1-5 seconds.

4. The method according to one or more of the preceding claims, **characterized in that** it comprises obtaining from the weight values thus detected the function which indicates the percentage weight loss of said system on the basis of the reaction time.

**5.** The method according to claim 4, **characterized in that** it comprises calculating the first derivative of said function, said first derivative being representative of the reaction rate of said system.

**6.** The method according to claim 5, **characterized in that** it comprises calculating the maximum point of said first derivative.

**7.** The method according to one or more of the preceding claims, **characterized in that** it comprises calculating the density reached by said closed-cell expanded polymer after a preset reaction time on the basis of the percentage weight loss undergone by said system in said reaction time.

**8.** The method according to claim 7, **characterized in that** said density is calculated with the formula:

$$D = [(100 - P) * A * L] \div [P * L + 100 * A]$$

where D is the density of the closed-cell expanded polymer reached in said reaction time, P is the percentage weight loss of said system in said reaction time, A is the density of the air of the environment in which said reaction occurs, expressed in $kg/m^3$, L is the density of the mixture of said first component and of said second component in the liquid state expressed in $kg/m^3$.

**9.** The method according to claim 8, wherein L is equal to approximately 1200 $kg/m^3$.

**10.** The method according to claim 8 or 9, wherein A is equal to approximately 1.2 $kg/m^3$.

**11.** The method according to one or more of claims 4 to 10, **characterized in that** it comprises processing the chart which represents said function and/or said first derivative.

**12.** The method according to one or more of the preceding claims, **characterized in that** said detection occurs in conditions of thermal insulation of said system.

**13.** The method according to one or more of the preceding claims, **characterized in that** said detection occurs in a closed environment under a hood.

**14.** The method according to one or more of the preceding claims, **characterized in that** it comprises, prior to said detection,

- preparing said mixture of at least said first component and said second component in the liquid state in preset quantities,

wherein said preparation comprises bringing said first component and said second component to a preset initial temperature, weighing within a same container said preset quantities of the first component and of the second component, subtracting the weight of said container, and mixing said mixture for a preset mixing time interval, wherein said initial temperature is on the order of 0-30 °C, and wherein said mixing time interval is on the order of 3-10 seconds.

**15.** The method according to one or more of claims 12 to 14, **characterized in that** said detection comprises arranging said system within a thermally insulated vessel and detecting over time the weight of said system, subtracting the weight of said vessel, and said detection comprises arranging said container which contains said system within said vessel and detecting over time the weight of said system, subtracting the weight of said vessel and said container.

**Patentansprüche**

**1.** Verfahren zur Steuerung des Verfahrens der Bildung von geschlossenzelligen geschäumten Polymeren, insbesondere Polyurethanschäumen, die durch ein Reaktionssystem erhalten sind, welches eine Mischung von mindestens einer ersten Komponente und einer zweiten Komponente in flüssigem Zustand umfasst, **dadurch gekennzeichnet,**

**dass** es den Schritt der Erfassung des Gewichts des Systems während der Reaktionszeit der ersten Komponente mit der zweiten Komponente enthält, um ein geschlossenzelliges geschäumtes Polymer zu erhalten, wobei der Gewichtsverlust des schäumenden Systems der Volumenzunahme, der es ausgesetzt ist, proportional ist.

2. Verfahren nach Anspruch 1, **dadurch gekennzeichnet, dass** die Erfassung kontinuierlich oder diskret über der Zeit erfolgt.

3. Verfahren nach Anspruch 2, **dadurch gekennzeichnet, dass** die Erfassung diskret bei Zeitintervallen in der Größenordnung von 1 - 5 Sekunden erfolgt.

4. Verfahren nach einem oder mehreren der vorangehenden Ansprüche, **dadurch gekennzeichnet, dass** es aus den so erfassten Gewichtswerten den Erhalt der Funktion umfasst, welche den prozentualen Gewichtsverlust des Systems auf der Basis der Reaktionszeit anzeigt.

5. Verfahren nach Anspruch 4, **dadurch gekennzeichnet, dass** es die Errechnung der ersten Ableitung der Funktion umfasst, wobei die erste Ableitung repräsentativ für die Reaktionsgeschwindigkeit des Systems ist.

6. Verfahren nach Anspruch 5, **dadurch gekennzeichnet, dass** es die Errechnung des Maximalpunkts der ersten Ableitung umfasst.

7. Verfahren nach einem oder mehreren der vorangehenden Ansprüche, **dadurch gekennzeichnet, dass** es die Errechnung der durch das geschlossenzellige geschäumte Polymer nach einer festgesetzten Reaktionszeit auf der Basis des prozentualen Gewichtsverlusts, dem das System in der Reaktionszeit ausgesetzt war, erreichten Dichte umfasst.

8. Verfahren nach Anspruch 7, **dadurch gekennzeichnet, dass** die Dichte mit der Formel errechnet wird:

$$D=[(100-P) \cdot A \cdot L] \div [P \cdot L + 100 \cdot A],$$

worin D die in der Reaktionszeit erreichte Dichte des geschlossenzelligen geschäumten Polymers ist, P der prozentuale Gewichtsverlust des Systems in der Reaktionszeit ist, A die Dichte der Umgebungsluft ist, in welcher die Reaktion stattfindet, ausgedrückt in $kg/m^3$, L die Dichte der Mischung der ersten Komponente und der zweiten Komponente in flüssigem Zustand ist, ausgedrückt in $kg/m^3$.

9. Verfahren nach Anspruch 8, worin L annähernd gleich 1.200 $kg/m^3$ ist.

10. Verfahren nach Anspruch 8 oder 9, worin A annähernd gleich 1,2 $kg/m^3$ ist.

11. Verfahren nach einem oder mehreren der Ansprüche 4 - 10, **dadurch gekennzeichnet, dass** es die Bearbeitung der Tabelle umfasst, welche die Funktion und/oder die erste Ableitung darstellt.

12. Verfahren nach einem oder mehreren der vorangehenden Ansprüche, **dadurch gekennzeichnet, dass** die Erfassung unter den Bedingungen thermischer Isolation des Systems erfolgt.

13. Verfahren nach einem oder mehreren der vorangehenden Ansprüche, **dadurch gekennzeichnet, dass** die Erfassung in einer geschlossenen Umgebung unter einer Haube erfolgt.

14. Verfahren nach einem oder mehreren der vorangehenden Ansprüche, **dadurch gekennzeichnet, dass** es vor dem Erfassungsschritt umfasst,
die Zubereitung der Mischung aus mindestens der ersten Komponente und der zweiten Komponente in flüssigem Zustand in festgesetzten Mengen,
worin die Zubereitung umfasst, das Bringen der ersten Komponente und der zweiten Komponente auf eine festgesetzte Anfangstemperatur, das Wiegen der festgesetzten Mengen der ersten Komponente und der zweiten Komponente innerhalb desselben Behälters, das Subtrahieren des Behältergewichts, und das Mischen der Mischung über ein festgesetztes Mischungszeitintervall, worin die Anfangstemperatur in der Größenordnung von 0 - 30°C ist, und worin das Mischungszeitintervall in der Größenordnung von 3 - 10 Sekunden ist.

**15.** Verfahren nach einem oder mehreren der Ansprüche 12 - 14, **dadurch gekennzeichnet, dass** der Erfassungsschritt das Einrichten des Systems innerhalb eines thermisch isolierten Gefäßes und Erfassen des Gewichts des Systems über der Zeit,
und Subtrahieren des Gewichts des Gefäßes umfasst,
und der Erfassungsschritt das Einrichten des Behälters, welcher das System innerhalb des Gefäßes enthält, und das Erfassen des Gewichts des Systems über der Zeit und Subtrahieren des Gewichts des Gefäßes und des Behälters umfasst.

**Revendications**

**1.** Procédé de régulation du processus de formation de polymères expansés en mousses à alvéoles fermées, en particulier de mousses de polyuréthane, obtenus à partir d'un système réactionnel qui comprend un mélange d'au moins un premier composant et un deuxième composant à l'état liquide, **caractérisé en ce qu'**il comporte le fait de mesurer le poids dudit système pendant le déroulement de la réaction dudit premier composant et dudit deuxième composant qui donne un polymère expansé en mousse à alvéoles fermées, la perte de poids dudit système en cours d'expansion étant proportionnelle à l'augmentation de volume qu'il subit.

**2.** Procédé conforme à la revendication 1, **caractérisé en ce que** ladite mesure est effectuée en mode continu ou discontinu au cours du temps.

**3.** Procédé conforme à la revendication 2, **caractérisé en ce que** ladite mesure est effectuée en mode discontinu, à intervalles de temps de l'ordre de 1 à 5 secondes.

**4.** Procédé conforme à l'une ou plusieurs des revendications précédentes, **caractérisé en ce qu'**il comporte le fait de déduire des valeurs de poids ainsi mesurées la fonction qui indique la perte de poids dudit système, en pourcentage, en fonction de la durée de réaction.

**5.** Procédé conforme à la revendication 4, **caractérisé en ce qu'**il comporte le fait de calculer la dérivée première de ladite fonction, laquelle dérivée première est une donnée représentative de la vitesse de réaction dudit système.

**6.** Procédé conforme à la revendication 5, **caractérisé en ce qu'**il comporte le fait de calculer le point de maximum de ladite dérivée première.

**7.** Procédé conforme à l'une ou plusieurs des revendications précédentes, **caractérisé en ce qu'**il comporte le fait de calculer la valeur atteinte, après une durée de réaction fixée au préalable, par la masse volumique dudit polymère expansé en mousse à alvéoles fermées, en se basant sur la perte de poids, en pourcentage, subie par ledit système pendant ladite durée de réaction.

**8.** Procédé conforme à la revendication 7, **caractérisé en ce que** l'on calcule ladite masse volumique à l'aide de la formule suivante :

$$D = [(100 - P)*A*L] / [P*L + 100*A]$$

dans laquelle D représente la masse volumique atteinte après ladite durée de réaction par le polymère expansé en mousse à alvéoles fermées, P représente la perte de poids, en pourcentage, dudit système pendant ladite durée de réaction, A représente la masse volumique, exprimée en $kg/m^3$, de l'air du milieu dans lequel se déroule ladite réaction, et L représente la masse volumique, exprimée en $kg/m^3$, du mélange dudit premier composant et dudit deuxième composant à l'état liquide.

**9.** Procédé conforme à la revendication 8, dans lequel la masse volumique L est à peu près égale à 1200 $kg/m^3$.

**10.** Procédé conforme à la revendication 8, dans lequel la masse volumique A est à peu près égale à 1,2 $kg/m^3$.

**11.** Procédé conforme à l'une ou plusieurs des revendications 4 à 10, **caractérisé en ce qu'**il comporte le fait d'établir le diagramme qui représente ladite fonction et/ou ladite dérivée première.

**12.** Procédé conforme à l'une ou plusieurs des revendications précédentes, **caractérisé en ce que** ladite mesure est opérée dans des conditions où ledit système est thermiquement isolé.

**13.** Procédé conforme à l'une ou plusieurs des revendications précédentes, **caractérisé en ce que** ladite mesure est opérée en milieu fermé, sous cloche.

**14.** Procédé conforme à l'une ou plusieurs des revendications précédentes, **caractérisé en ce qu'**il comporte, avant ladite mesure, le fait de préparer ledit mélange d'au moins ledit premier composant et ledit deuxième composant à l'état liquide, en des quantités fixées au préalable, laquelle opération de préparation comporte le fait de porter ledit premier composant et ledit deuxième composant à une température initiale fixée au préalable, le fait de peser dans un même récipient lesdites quantités fixées au préalable du premier composant et du deuxième composant, le fait de soustraire le poids dudit récipient, et le fait de brasser ledit mélange pendant un laps de temps de brassage fixé au préalable, étant entendu que ladite température initiale est de l'ordre de 0 à 30 °C et que ledit laps de temps de brassage est de l'ordre de 3 à 10 secondes.

**15.** Procédé conforme à l'une ou plusieurs des revendications 12 à 14, **caractérisé en ce que** ladite opération de mesure comporte le fait de disposer ledit système dans une cuve thermiquement isolée, et le fait de mesurer le poids dudit système au cours du temps, en soustrayant le poids de ladite cuve, et **en ce que** ladite opération de mesure comporte le fait de disposer ledit récipient contenant ledit système dans ladite cuve, et le fait de mesurer le poids dudit système au cours du temps, en soustrayant le poids de ladite cuve et dudit récipient.

*10*

*14*

*11*

*13*

*12*

*Fig. 1a*

*17*

*14*

*Fig. 1b*

*18*

*Fig. 1c*

*16*

*10*

*15*

*14*

*13*

*11*

*12*

| weight | seconds | weight % | growth rate |
|---|---|---|---|
| 154.14000 | 95 | 0.828 | 0.019 |
| 154.10000 | 96 | 0.847 | 0.019 |
| 154.07000 | 97 | 0.860 | 0.019 |
| 154.03000 | 98 | 0.885 | 0.020 |
| 153.98000 | 99 | 0.911 | 0.019 |
| 153.95000 | 100 | 0.917 | 0.021 |
| 153.90000 | 101 | 0.943 | 0.020 |
| 153.86000 | 102 | 0.956 | 0.020 |
| 153.83000 | 103 | 0.982 | 0.022 |
| 153.79000 | 104 | 1.001 | 0.021 |
| 153.73000 | 105 | 1.026 | 0.022 |
| 153.70000 | 106 | 1.039 | 0.023 |
| 153.66000 | 107 | 1.071 | 0.023 |
| 153.62000 | 108 | 1.084 | 0.024 |
| 153.57000 | 109 | 1.110 | 0.025 |
| 153.53000 | 110 | 1.136 | 0.024 |
| 153.48000 | 111 | 1.155 | 0.025 |
| 153.45000 | 112 | 1.180 | 0.026 |
| 153.40000 | 113 | 1.213 | 0.026 |
| 153.35000 | 114 | 1.232 | 0.026 |
| 153.25000 | 115 | 1.264 | 0.026 |
| 153.20000 | 116 | 1.290 | 0.026 |
| 153.15000 | 117 | 1.309 | 0.027 |
| 153.11000 | 118 | 1.334 | 0.027 |
| 153.05000 | 119 | 1.373 | 0.026 |
| 153.04000 | 120 | 1.392 | 0.028 |
| 152.96000 | 121 | 1.418 | 0.028 |
| 152.90000 | 122 | 1.444 | 0.031 |
| 152.86000 | 123 | 1.476 | 0.032 |
| 152.81000 | 124 | 1.501 | 0.033 |
| 152.76000 | 125 | 1.533 | 0.033 |
| 152.71000 | 126 | 1.553 | 0.033 |
| 152.67000 | 127 | 1.585 | 0.031 |
| 152.61000 | 128 | 1.617 | 0.033 |
| 152.58000 | 129 | 1.681 | 0.035 |
| 152.53000 | 130 | 1.713 | 0.035 |
| 152.48000 | 131 | 1.745 | 0.031 |
| 152.42000 | 132 | 1.771 | 0.031 |
| 152.39000 | 133 | 1.809 | 0.031 |
| 152.33000 | 134 | 1.816 | 0.032 |
| 152.29000 | 135 | 1.867 | 0.030 |
| 152.26000 | 136 | 1.905 | 0.033 |
| 152.20000 | 137 | 1.931 | 0.033 |
| 152.17000 | 138 | 1.963 | 0.031 |
| 152.13000 | 139 | 1.995 | 0.030 |
| 152.09000 | 140 | 2.027 | 0.031 |
| 152.04000 | 141 | 2.053 | 0.031 |
| 152.00000 | 142 | 2.091 | 0.030 |
| 151.97000 | 143 | 2.111 | 0.029 |
| 151.93000 | 144 | 2.143 | 0.030 |
| 151.91000 | 145 | 2.175 | 0.029 |
| 151.87000 | 146 | 2.213 | 0.028 |
| 151.84000 | 147 | 2.233 | 0.029 |
| 151.80000 | 148 | 2.271 | 0.028 |
| 151.77000 | 149 | 2.297 | 0.028 |
| 151.74000 | 150 | 2.316 | 0.027 |

| weight | seconds | weight % | growth rate |
|---|---|---|---|
| 155.43000 | 39 | 0.160 | 0.010 |
| 155.41000 | 40 | 0.186 | 0.008 |
| 155.40000 | 41 | 0.173 | 0.009 |
| 155.38000 | 42 | 0.186 | 0.008 |
| 155.37000 | 43 | 0.186 | 0.007 |
| 155.35000 | 44 | 0.199 | 0.009 |
| 155.33000 | 45 | 0.212 | 0.010 |
| 155.31000 | 46 | 0.225 | 0.010 |
| 155.30000 | 47 | 0.225 | 0.010 |
| 155.27000 | 48 | 0.237 | 0.009 |
| 155.27000 | 49 | 0.244 | 0.009 |
| 155.24000 | 50 | 0.257 | 0.010 |
| 155.23000 | 51 | 0.263 | 0.010 |
| 155.21000 | 52 | 0.276 | 0.010 |
| 155.20000 | 53 | 0.282 | 0.010 |
| 155.18000 | 54 | 0.295 | 0.010 |
| 155.16000 | 55 | 0.302 | 0.011 |
| 155.14000 | 56 | 0.314 | 0.010 |
| 155.13000 | 57 | 0.321 | 0.011 |
| 155.11000 | 58 | 0.334 | 0.011 |
| 155.08000 | 59 | 0.346 | 0.011 |
| 155.07000 | 60 | 0.359 | 0.011 |
| 155.04000 | 61 | 0.366 | 0.011 |
| 155.02000 | 62 | 0.385 | 0.011 |
| 155.01000 | 63 | 0.385 | 0.011 |
| 154.99000 | 64 | 0.404 | 0.011 |
| 154.96000 | 65 | 0.411 | 0.010 |
| 154.94000 | 66 | 0.423 | 0.012 |
| 154.92000 | 67 | 0.430 | 0.011 |
| 154.90000 | 68 | 0.443 | 0.012 |
| 154.90000 | 69 | 0.456 | 0.012 |
| 154.86000 | 70 | 0.468 | 0.012 |
| 154.83000 | 71 | 0.475 | 0.012 |
| 154.81000 | 72 | 0.488 | 0.013 |
| 154.79000 | 73 | 0.507 | 0.013 |
| 154.76000 | 74 | 0.513 | 0.013 |
| 154.74000 | 75 | 0.532 | 0.013 |
| 154.71000 | 76 | 0.545 | 0.012 |
| 154.69000 | 77 | 0.552 | 0.013 |
| 154.67000 | 78 | 0.565 | 0.013 |
| 154.64000 | 79 | 0.584 | 0.013 |
| 154.61000 | 80 | 0.597 | 0.014 |
| 154.58000 | 81 | 0.609 | 0.015 |
| 154.55000 | 82 | 0.622 | 0.015 |
| 154.53000 | 83 | 0.622 | 0.015 |
| 154.49000 | 84 | 0.648 | 0.015 |
| 154.45000 | 85 | 0.667 | 0.015 |
| 154.44000 | 86 | 0.680 | 0.017 |
| 154.40000 | 87 | 0.693 | 0.016 |
| 154.38000 | 88 | 0.712 | 0.016 |
| 154.34000 | 89 | 0.725 | 0.017 |
| 154.31000 | 90 | 0.744 | 0.017 |
| 154.27000 | 91 | 0.757 | 0.017 |
| 154.25000 | 92 | 0.770 | 0.019 |
| 154.20000 | 93 | 0.789 | 0.017 |
| 154.18000 | 94 | 0.808 | 0.019 |

| weight | seconds | weight % | growth rate |
|---|---|---|---|
| 155.84000 | 0 | 0 | |
| 155.86000 | 1 | 0 | |
| 155.85000 | 2 | 0 | |
| 155.86000 | 3 | 0 | |
| 155.87000 | 4 | 0 | 0.000 |
| 155.86000 | 5 | 0 | 0.000 |
| 155.86000 | 6 | 0 | 0.000 |
| 155.85000 | 7 | 0 | 0.000 |
| 155.84000 | 8 | 0 | 0.000 |
| 155.84000 | 9 | 0 | 0.000 |
| 155.83000 | 10 | 0 | 0.000 |
| 155.81000 | 11 | 0 | 0.000 |
| 155.80000 | 12 | 0.045 | 0.001 |
| 155.78000 | 13 | 0.019 | 0.001 |
| 155.79000 | 14 | 0.019 | -0.003 |
| 155.76000 | 15 | 0.006 | 0.000 |
| 155.75000 | 16 | 0.013 | 0.001 |
| 155.75000 | 17 | 0.006 | 0.003 |
| 155.74000 | 18 | 0.000 | 0.003 |
| 155.71000 | 19 | 0.006 | 0.003 |
| 155.71000 | 20 | 0.006 | 0.005 |
| 155.70000 | 21 | 0.013 | 0.005 |
| 155.68000 | 22 | 0.019 | 0.006 |
| 155.64000 | 23 | 0.019 | 0.007 |
| 155.64000 | 24 | 0.026 | 0.006 |
| 155.62000 | 25 | 0.038 | 0.006 |
| 155.58000 | 26 | 0.045 | 0.008 |
| 155.60000 | 27 | 0.058 | 0.008 |
| 155.60000 | 28 | 0.051 | 0.008 |
| 155.58000 | 29 | 0.071 | 0.009 |
| 155.56000 | 30 | 0.077 | 0.009 |
| 155.54000 | 31 | 0.077 | 0.009 |
| 155.52000 | 32 | 0.083 | 0.010 |
| 155.52000 | 33 | 0.103 | 0.011 |
| 155.50000 | 34 | 0.103 | 0.010 |
| 155.49000 | 35 | 0.115 | 0.009 |
| 155.47000 | 36 | 0.122 | 0.008 |
| 155.46000 | 37 | 0.148 | 0.010 |
| 155.44000 | 38 | 0.148 | 0.010 |

*Fig. 2a*

14

| weight | seconds | weight % | growth rate |
|---|---|---|---|
| 151.71000 | 151 | 2.355 | 0.026 |
| 151.67000 | 152 | 2.374 | 0.024 |
| 151.64000 | 153 | 2.399 | 0.025 |
| 151.61000 | 154 | 2.425 | 0.023 |
| 151.59000 | 155 | 2.457 | 0.024 |
| 151.55000 | 156 | 2.483 | 0.023 |
| 151.54000 | 157 | 2.502 | 0.022 |
| 151.50000 | 158 | 2.528 | 0.021 |
| 151.48000 | 159 | 2.541 | 0.021 |
| 151.45000 | 160 | 2.566 | 0.021 |
| 151.44000 | 161 | 2.585 | 0.021 |
| 151.41000 | 162 | 2.611 | 0.021 |
| 151.39000 | 163 | 2.630 | 0.021 |
| 151.36000 | 164 | 2.650 | 0.019 |
| 151.35000 | 165 | 2.669 | 0.019 |
| 151.33000 | 166 | 2.695 | 0.019 |
| 151.30000 | 167 | 2.714 | 0.019 |
| 151.28000 | 168 | 2.733 | 0.017 |
| 151.27000 | 169 | 2.746 | 0.017 |
| 151.25000 | 170 | 2.772 | 0.016 |
| 151.23000 | 171 | 2.778 | 0.016 |
| 151.22000 | 172 | 2.804 | 0.015 |
| 151.20000 | 173 | 2.816 | 0.014 |
| 151.19000 | 174 | 2.836 | 0.015 |
| 151.18000 | 175 | 2.842 | 0.014 |
| 151.16000 | 176 | 2.861 | 0.013 |
| 151.14000 | 177 | 2.874 | 0.013 |
| 151.13000 | 178 | 2.893 | 0.013 |
| 151.12000 | 179 | 2.900 | 0.012 |
| 151.11000 | 180 | 2.913 | 0.012 |
| 151.09000 | 181 | 2.932 | 0.011 |
| 151.08000 | 182 | 2.945 | 0.011 |
| 151.07000 | 183 | 2.951 | 0.011 |
| 151.06000 | 184 | 2.964 | 0.010 |
| 151.06000 | 185 | 2.977 | 0.010 |
| 151.04000 | 186 | 2.983 | 0.010 |
| 151.04000 | 187 | 2.996 | 0.009 |
| 151.03000 | 188 | 3.003 | 0.009 |
| 151.02000 | 189 | 3.009 | 0.009 |
| 151.02000 | 190 | 3.022 | 0.008 |
| 151.01000 | 191 | 3.035 | 0.008 |
| 151.00000 | 192 | 3.041 | 0.008 |
| 150.98000 | 193 | 3.047 | 0.008 |
| 150.98000 | 194 | 3.054 | 0.006 |
| 150.98000 | 195 | 3.067 | 0.006 |
| 150.97000 | 196 | 3.073 | 0.006 |
| 150.97000 | 197 | 3.079 | 0.006 |
| 150.96000 | 198 | 3.086 | 0.005 |
| 150.95000 | 199 | 3.086 | 0.005 |
| 150.95000 | 200 | 3.099 | 0.006 |
| 150.94000 | 201 | 3.099 | 0.005 |
| 150.93000 | 202 | 3.105 | 0.005 |
| 150.93000 | 203 | 3.112 | 0.004 |
| 150.93000 | 204 | 3.112 | 0.004 |
| 150.92000 | 205 | 3.118 | 0.004 |
| 150.91000 | 206 | 3.124 | 0.004 |

| weight | seconds | weight % | growth rate |
|---|---|---|---|
| 150.91000 | 207 | 3.137 | 0.004 |
| 150.90000 | 208 | 3.137 | 0.004 |
| 150.90000 | 209 | 3.137 | 0.004 |
| 150.90000 | 210 | 3.144 | 0.003 |
| 150.90000 | 211 | 3.144 | 0.003 |
| 150.89000 | 212 | 3.150 | 0.004 |
| 150.88000 | 213 | 3.156 | 0.004 |
| 150.89000 | 214 | 3.156 | 0.004 |
| 150.89000 | 215 | 3.163 | 0.004 |
| 150.88000 | 216 | 3.169 | 0.003 |
| 150.87000 | 217 | 3.169 | 0.003 |
| 150.87000 | 218 | 3.169 | 0.003 |
| 150.87000 | 219 | 3.176 | 0.003 |
| 150.87000 | 220 | 3.182 | 0.003 |
| 150.87000 | 221 | 3.182 | 0.003 |
| 150.87000 | 222 | 3.189 | 0.002 |
| 150.87000 | 223 | 3.189 | 0.002 |
| 150.86000 | 224 | 3.189 | 0.003 |
| 150.85000 | 225 | 3.189 | 0.002 |
| 150.85000 | 226 | 3.195 | 0.002 |
| 150.85000 | 227 | 3.201 | 0.002 |
| 150.85000 | 228 | 3.195 | 0.002 |
| 150.84000 | 229 | 3.195 | 0.001 |
| 150.85000 | 230 | 3.201 | 0.001 |
| 150.84000 | 231 | 3.208 | 0.002 |
| 150.83000 | 232 | 3.208 | 0.003 |
| 150.83000 | 233 | 3.208 | 0.002 |
| 150.83000 | 234 | 3.208 | 0.001 |
| 150.84000 | 235 | 3.208 | 0.001 |
| 150.83000 | 236 | 3.208 | 0.002 |
| 150.83000 | 237 | 3.208 | 0.001 |
| 150.83000 | 238 | 3.214 | 0.002 |
| 150.83000 | 239 | 3.221 | 0.003 |
| 150.83000 | 240 | 3.221 | 0.003 |
| 150.83000 | 241 | 3.221 | 0.002 |
| 150.82000 | 242 | 3.221 | 0.001 |
| 150.82000 | 243 | 3.227 | 0.001 |
| 150.82000 | 244 | 3.221 | 0.001 |
| 150.82000 | 245 | 3.227 | 0.001 |
| 150.82000 | 246 | 3.233 | 0.001 |
| 150.82000 | 247 | 3.233 | 0.001 |
| 150.81000 | 248 | 3.233 | 0.001 |
| 150.82000 | 249 | 3.227 | 0.001 |
| 150.82000 | 250 | 3.233 | 0.001 |
| 150.82000 | 251 | 3.233 | 0.001 |
| 150.81000 | 252 | 3.233 | 0.001 |
| 150.82000 | 253 | 3.233 | 0.001 |
| 150.81000 | 254 | 3.233 | 0.001 |
| 150.82000 | 255 | 3.233 | 0.001 |
| 150.81000 | 256 | 3.240 | 0.001 |
| 150.81000 | 257 | 3.240 | 0.001 |
| 150.81000 | 258 | 3.240 | 0.001 |
| 150.81000 | 259 | 3.240 | 0.001 |
| 150.81000 | 260 | 3.240 | 0.000 |
| 150.81000 | 261 | 3.240 | 0.001 |
| 150.81000 | 262 | 3.246 | 0.000 |

| weight | seconds | weight % | growth rate |
|---|---|---|---|
| 150.81000 | 263 | 3.240 | 0.001 |
| 150.81000 | 264 | 3.240 | 0.001 |
| 150.81000 | 265 | 3.240 | 0.000 |
| 150.81000 | 266 | 3.246 | 0.001 |
| 150.81000 | 267 | 3.240 | 0.001 |
| 150.82000 | 268 | 3.246 | 0.000 |
| 150.82000 | 269 | 3.240 | 0.000 |
| 150.81000 | 270 | 3.246 | 0.001 |
| 150.81000 | 271 | 3.246 | 0.000 |
| 150.81000 | 272 | 3.246 | 0.001 |
| 150.81000 | 273 | 3.246 | 0.000 |
| 150.80000 | 274 | 3.246 | 0.000 |
| 150.81000 | 275 | 3.240 | -0.001 |
| 150.82000 | 276 | 3.246 | -0.001 |
| 150.81000 | 277 | 3.246 | 0.000 |
| 150.81000 | 278 | 3.246 | 0.001 |
| 150.81000 | 279 | 3.246 | 0.000 |
| 150.81000 | 280 | 3.246 | 0.000 |
| 150.81000 | 281 | 3.246 | 0.001 |
| 150.81000 | 282 | 3.240 | 0.000 |
| 150.82000 | 283 | 3.240 | -0.001 |
| 150.81000 | 284 | 3.246 | 0.000 |
| 150.82000 | 285 | 3.246 | 0.001 |
| 150.81000 | 286 | 3.246 | 0.001 |
| 150.80000 | 287 | 3.246 | 0.000 |
| 150.82000 | 288 | 3.253 | 0.000 |
| 150.81000 | 289 | 3.246 | 0.000 |
| 150.80000 | 290 | 3.240 | -0.001 |
| 150.80000 | 291 | 3.246 | -0.001 |
| 150.80000 | 292 | 3.246 | -0.001 |
| 150.80000 | 293 | 3.246 | 0.001 |
| 150.80000 | 294 | 3.246 | 0.001 |
| 150.80000 | 295 | 3.246 | -0.001 |
| 150.80000 | 296 | 3.246 | 0.000 |
| 150.80000 | 297 | 3.240 | 0.001 |
| 150.80000 | 298 | 3.246 | 0.001 |
| 150.80000 | 299 | 3.240 | 0.001 |
| 150.80000 | 300 | 3.246 | 0.001 |
| 150.79000 | 301 | 3.253 | 0.001 |
| 150.79000 | 302 | 3.240 | 0.001 |
| 150.80000 | 303 | 3.246 | 0.001 |
| 150.80000 | 304 | 3.253 | 0.000 |
| 150.80000 | 305 | 3.253 | 0.001 |
| 150.80000 | 306 | 3.253 | 0.001 |
| 150.80000 | 307 | 3.253 | 0.000 |
| 150.80000 | 308 | 3.253 | 0.001 |
| 150.80000 | 309 | 3.253 | 0.001 |
| 150.80000 | 310 | 3.253 | 0.000 |
| 150.80000 | 311 | 3.253 | 0.000 |
| 150.79000 | 312 | 3.253 | 0.000 |
| 150.79000 | 313 | 3.253 | 0.000 |
| 150.80000 | 314 | 3.253 | 0.000 |
| 150.80000 | 315 | 3.259 | 0.000 |
| 150.80000 | 316 | 3.259 | 0.000 |
| 150.80000 | 317 | 3.253 | 0.000 |
| 150.80000 | 318 | 3.253 | -0.001 |

| weight | seconds | weight % | growth rate |
|---|---|---|---|
| 150.80000 | 319 | 3.253 | 0.000 |
| 150.80000 | 320 | 3.253 | 0.001 |
| 150.80000 | 321 | 3.253 | 0.000 |
| 150.80000 | 322 | 3.253 | 0.000 |
| 150.80000 | 323 | 3.253 | 0.000 |
| 150.80000 | 324 | 3.253 | 0.000 |
| 150.80000 | 325 | 3.253 | 0.000 |
| 150.80000 | 326 | 3.259 | 0.000 |
| 150.80000 | 327 | 3.259 | 0.000 |
| 150.80000 | 328 | 3.253 | 0.000 |
| 150.80000 | 329 | 3.253 | -0.001 |
| 150.80000 | 330 | 3.253 | -0.001 |
| 150.80000 | 331 | 3.253 | 0.000 |
| 150.80000 | 332 | 3.253 | 0.000 |
| 150.80000 | 333 | 3.253 | 0.000 |
| 150.80000 | 334 | 3.253 | 0.000 |
| 150.80000 | 335 | 3.253 | 0.000 |
| 150.80000 | 336 | 3.253 | 0.000 |
| 150.80000 | 337 | 3.253 | 0.000 |
| 150.80000 | 338 | 3.253 | 0.000 |
| 150.80000 | 339 | 3.253 | 0.000 |
| 150.80000 | 340 | 3.253 | 0.000 |
| 150.80000 | 341 | 3.253 | 0.000 |
| 150.80000 | 342 | 3.253 | 0.000 |
| 150.80000 | 343 | 3.253 | 0.000 |
| 150.79000 | 344 | 3.253 | 0.000 |
| 150.80000 | 345 | 3.253 | 0.000 |
| 150.80000 | 346 | 3.253 | 0.000 |
| 150.80000 | 347 | 3.253 | 0.000 |
| 150.80000 | 348 | 3.253 | 0.000 |
| 150.81000 | 349 | 3.253 | 0.000 |
| 150.81000 | 350 | 3.253 | 0.000 |
| 150.80000 | 351 | 3.253 | 0.001 |
| 150.80000 | 352 | 3.253 | 0.000 |
| 150.80000 | 353 | 3.253 | 0.000 |
| 150.80000 | 354 | 3.253 | 0.000 |
| 150.80000 | 355 | 3.253 | 0.000 |
| 150.80000 | 356 | 3.253 | 0.000 |
| 150.81000 | 357 | 3.253 | -0.001 |
| 150.81000 | 358 | 3.259 | 0.000 |
| 150.80000 | 359 | 3.253 | 0.000 |
| 150.79000 | 360 | 3.253 | 0.000 |
| 150.80000 | 361 | 3.253 | -0.001 |
| 150.80000 | 362 | 3.253 | 0.000 |
| 150.79000 | 363 | 3.253 | 0.000 |
| 150.80000 | 364 | 3.246 | -0.001 |
| 150.80000 | 365 | 3.253 | 0.000 |
| 150.79000 | 366 | 3.253 | 0.000 |
| 150.80000 | 367 | 3.253 | 0.001 |
| 150.79000 | 368 | 3.253 | 0.000 |
| 150.79000 | 369 | 3.253 | 0.000 |
| 150.80000 | 370 | 3.253 | 0.001 |
| 150.81000 | 371 | 3.246 | 0.000 |
| 150.80000 | 372 | 3.253 | 0.000 |
| 150.80000 | 373 | 3.253 | 0.001 |
| 150.80000 | 374 | 3.259 | 0.001 |

*Fig. 2b*

*Fig. 2c*

| weight | seconds | weight % |
|---|---|---|
| 150.78000 | 599 | 3.253 |
| 150.78000 | 600 | 3.266 |
| 150.79000 | 601 | 3.266 |
| 150.78000 | 602 | 3.266 |
| 150.78000 | 603 | 3.266 |
| 150.78000 | 604 | 3.266 |
| 150.78000 | 605 | 3.266 |
| 150.78000 | 606 | 3.266 |
| 150.78000 | 607 | 3.266 |
| 150.78000 | 608 | 3.266 |
| 150.78000 | 609 | 3.266 |
| 150.78000 | 610 | 3.266 |
| 150.77000 | 611 | 3.266 |
| 150.78000 | 612 | 3.266 |
| 150.78000 | 613 | 3.266 |
| 150.78000 | 614 | 3.266 |
| 150.78000 | 615 | 3.259 |
| 150.78000 | 616 | 3.266 |
| 150.78000 | 617 | 3.266 |
| 150.78000 | 618 | 3.266 |
| 150.78000 | 619 | 3.266 |
| 150.79000 | 620 | 3.266 |
| 150.78000 | 621 | 3.266 |
| 150.78000 | 622 | 3.266 |
| 150.78000 | 623 | 3.266 |
| 150.78000 | 624 | 3.266 |
| 150.78000 | 625 | 3.266 |
| 150.78000 | 626 | 3.266 |
| 150.78000 | 627 | 3.266 |
| 150.78000 | 628 | 3.272 |
| 150.78000 | 629 | 3.266 |
| 150.78000 | 630 | 3.266 |
| 150.78000 | 631 | 3.266 |
| 150.78000 | 632 | 3.266 |
| 150.78000 | 633 | 3.266 |
| 150.78000 | 634 | 3.266 |
| 150.79000 | 635 | 3.266 |
| 150.78000 | 636 | 3.266 |
| 150.78000 | 637 | 3.259 |
| 150.78000 | 638 | 3.266 |
| 150.78000 | 639 | 3.266 |
| 150.78000 | 640 | 3.266 |
| 150.78000 | 641 | 3.266 |
| 150.78000 | 642 | 3.266 |
| 150.78000 | 643 | 3.259 |
| 150.78000 | 644 | 3.266 |
| 150.78000 | 645 | 3.266 |
| 150.77000 | 646 | 3.266 |
| 150.78000 | 647 | 3.266 |
| 150.76000 | 648 | 3.259 |
| 150.79000 | 649 | 3.266 |
| 150.78000 | 650 | 3.272 |
| 150.78000 | 651 | 3.266 |
| 150.78000 | 652 | 3.266 |
| 150.78000 | 653 | 3.266 |
| 150.78000 | 654 | 3.266 |

| weight | seconds | weight % |
|---|---|---|
| 150.78000 | 655 | 3.266 |
| 150.79000 | 656 | 3.266 |
| 150.78000 | 657 | 3.266 |
| 150.78000 | 658 | 3.266 |
| 150.77000 | 659 | 3.266 |
| 150.78000 | 660 | 3.272 |
| 150.78000 | 661 | 3.266 |
| 150.78000 | 662 | 3.266 |
| 150.78000 | 663 | 3.266 |
| 150.78000 | 664 | 3.278 |
| 150.78000 | 665 | 3.259 |
| 150.77000 | 666 | 3.266 |
| 150.78000 | 667 | 3.266 |
| 150.78000 | 668 | 3.266 |
| 150.78000 | 669 | 3.266 |
| 150.78000 | 670 | 3.266 |
| 150.78000 | 671 | 3.259 |
| 150.77000 | 672 | 3.266 |
| 150.78000 | 673 | 3.272 |
| 150.78000 | 674 | 3.266 |
| 150.78000 | 675 | 3.266 |
| 150.78000 | 676 | 3.266 |
| 150.78000 | 677 | 3.266 |
| 150.78000 | 678 | 3.266 |
| 150.78000 | 679 | 3.266 |
| 150.77000 | 680 | 3.272 |
| 150.78000 | 681 | 3.266 |
| 150.78000 | 682 | 3.266 |
| 150.78000 | 683 | 3.266 |
| 150.78000 | 684 | 3.266 |
| 150.78000 | 685 | 3.266 |
| 150.78000 | 686 | 3.266 |
| 150.78000 | 687 | 3.272 |
| 150.78000 | 688 | 3.266 |
| 150.78000 | 689 | 3.266 |
| 150.78000 | 690 | 3.266 |
| 150.77000 | 691 | 3.266 |
| 150.78000 | 692 | 3.266 |
| 150.76000 | 693 | 3.272 |
| 150.79000 | 694 | 3.266 |
| 150.78000 | 695 | 3.266 |
| 150.78000 | 696 | 3.266 |
| 150.78000 | 697 | 3.266 |
| 150.79000 | 698 | 3.266 |
| 150.78000 | 699 | 3.266 |
| 150.79000 | 700 | 3.266 |
| 150.79000 | 701 | 3.266 |
| 150.79000 | 702 | 3.266 |
| 150.79000 | 703 | 3.266 |
| 150.79000 | 704 | 3.266 |
| 150.79000 | 705 | 3.272 |
| 150.78000 | 706 | 3.266 |
| 150.79000 | 707 | 3.285 |
| 150.78000 | 708 | 3.278 |
| 150.78000 | 709 | 3.259 |
| 150.78000 | 710 | 3.266 |

| weight | seconds | weight % |
|---|---|---|
| 150.78000 | 711 | 3.266 |
| 150.78000 | 712 | 3.259 |
| 150.78000 | 713 | 3.266 |
| 150.78000 | 714 | 3.259 |
| 150.78000 | 715 | 3.259 |
| 150.78000 | 716 | 3.266 |
| 150.77000 | 717 | 3.259 |
| 150.78000 | 718 | 3.266 |
| 150.80000 | 719 | 3.266 |
| 150.78000 | 720 | 3.266 |
| 150.78000 | 721 | 3.266 |
| 150.77000 | 722 | 3.266 |
| 150.78000 | 723 | 3.266 |
| 150.78000 | 724 | 3.266 |
| 150.78000 | 725 | 3.266 |
| 150.78000 | 726 | 3.266 |
| 150.78000 | 727 | 3.266 |
| 150.78000 | 728 | 3.266 |
| 150.79000 | 729 | 3.266 |
| 150.78000 | 730 | 3.272 |
| 150.78000 | 731 | 3.253 |
| 150.78000 | 732 | 3.266 |
| 150.78000 | 733 | 3.266 |
| 150.78000 | 734 | 3.266 |
| 150.78000 | 735 | 3.266 |
| 150.77000 | 736 | 3.272 |
| 150.78000 | 737 | 3.266 |
| 150.79000 | 738 | 3.266 |
| 150.78000 | 739 | 3.266 |
| 150.78000 | 740 | 3.266 |
| 150.78000 | 741 | 3.266 |
| 150.77000 | 742 | 3.266 |
| 150.78000 | 743 | 3.259 |
| 150.78000 | 744 | 3.259 |
| 150.77000 | 745 | 3.266 |
| 150.78000 | 746 | 3.266 |
| 150.78000 | 747 | 3.266 |
| 150.78000 | 748 | 3.266 |
| 150.78000 | 749 | 3.266 |
| 150.75000 | 750 | 3.266 |
| 150.78000 | 751 | 3.272 |
| 150.78000 | 752 | 3.266 |
| 150.78000 | 753 | 3.266 |
| 150.78000 | 754 | 3.266 |
| 150.78000 | 755 | 3.266 |
| 150.76000 | 756 | 3.272 |
| 150.78000 | 757 | 3.266 |
| 150.76000 | 758 | 3.266 |
| 150.77000 | 759 | 3.272 |
| 150.78000 | 760 | 3.266 |
| 150.77000 | 761 | 3.266 |
| 150.78000 | 762 | 3.266 |
| 150.78000 | 763 | 3.266 |
| 150.78000 | 764 | 3.266 |
| 150.78000 | 765 | 3.266 |
| 150.77000 | 766 | 3.266 |

| weight | seconds | weight % |
|---|---|---|
| 150.78000 | 767 | 3.266 |
| 150.78000 | 768 | 3.266 |
| 150.78000 | 769 | 3.266 |
| 150.78000 | 770 | 3.266 |
| 150.78000 | 771 | 3.278 |
| 150.78000 | 772 | 3.266 |
| 150.78000 | 773 | 3.272 |
| 150.78000 | 774 | 3.266 |
| 150.78000 | 775 | 3.266 |
| 150.78000 | 776 | 3.266 |
| 150.77000 | 777 | 3.266 |
| 150.78000 | 778 | 3.266 |
| 150.78000 | 779 | 3.272 |
| 150.78000 | 780 | 3.266 |
| 150.78000 | 781 | 3.266 |
| 150.76000 | 782 | 3.272 |
| 150.78000 | 783 | 3.266 |
| 150.77000 | 784 | 3.266 |
| 150.77000 | 785 | 3.266 |
| 150.78000 | 786 | 3.266 |
| 150.77000 | 787 | 3.266 |
| 150.78000 | 788 | 3.266 |
| 150.78000 | 789 | 3.266 |
| 150.78000 | 790 | 3.266 |
| 150.78000 | 791 | 3.266 |
| 150.78000 | 792 | 3.272 |
| 150.78000 | 793 | 3.266 |
| 150.78000 | 794 | 3.266 |
| 150.78000 | 795 | 3.272 |
| 150.78000 | 796 | 3.266 |
| 150.78000 | 797 | 3.272 |
| 150.78000 | 798 | 3.272 |
| 150.78000 | 799 | 3.266 |
| 150.78000 | 800 | 3.266 |
| 150.77000 | 801 | 3.266 |
| 150.76000 | 802 | 3.272 |
| 150.78000 | 803 | 3.266 |
| 150.78000 | 804 | 3.266 |
| 150.78000 | 805 | 3.266 |
| 150.78000 | 806 | 3.266 |
| 150.78000 | 807 | 3.266 |
| 150.78000 | 808 | 3.278 |
| 150.77000 | 809 | 3.266 |
| 150.78000 | 810 | 3.266 |
| 150.77000 | 811 | 3.266 |
| 150.78000 | 812 | 3.266 |
| 150.77000 | 813 | 3.266 |
| 150.78000 | 814 | 3.266 |
| 150.77000 | 815 | 3.272 |
| 150.78000 | 816 | 3.278 |
| 150.77000 | 817 | 3.272 |
| 150.77000 | 818 | 3.266 |
| 150.77000 | 819 | 3.266 |
| 150.77000 | 820 | 3.272 |
| 150.76000 | 821 | 3.272 |
| 150.77000 | 822 | 3.272 |

*Fig. 2d*

17

| weight | seconds | weigth % |
|---|---|---|
| 150.79000 | 879 | 3.266 |
| 150.79000 | 880 | 3.266 |
| 150.78000 | 881 | 3.266 |
| 150.78000 | 882 | 3.266 |
| 150.78000 | 883 | 3.266 |
| 150.79000 | 884 | 3.266 |
| 150.79000 | 885 | 3.266 |
| 150.78000 | 886 | 3.266 |
|  | 887 | 3.266 |
|  | 888 | 3.266 |
|  | 889 | 3.266 |
|  | 890 | 3.259 |
|  | 891 | 3.259 |
|  | 892 | 3.266 |
|  | 893 | 3.259 |
|  | 894 | 3.259 |
|  | 895 | 3.266 |
|  | 896 | 3.266 |
|  | 897 | 3.266 |
|  | 898 | 3.259 |
|  | 899 | 3.259 |
|  | 900 | 3.266 |

| weight | seconds | weight % |
|---|---|---|
| 150.78000 | 823 | 3.278 |
| 150.77000 | 824 | 3.272 |
| 150.76000 | 825 | 3.272 |
| 150.77000 | 826 | 3.272 |
| 150.78000 | 827 | 3.266 |
| 150.78000 | 828 | 3.272 |
| 150.77000 | 829 | 3.272 |
| 150.78000 | 830 | 3.272 |
| 150.78000 | 831 | 3.272 |
| 150.78000 | 832 | 3.272 |
| 150.76000 | 833 | 3.266 |
| 150.77000 | 834 | 3.272 |
| 150.76000 | 835 | 3.278 |
| 150.76000 | 836 | 3.272 |
| 150.76000 | 837 | 3.266 |
| 150.77000 | 838 | 3.272 |
| 150.78000 | 839 | 3.278 |
| 150.78000 | 840 | 3.272 |
| 150.77000 | 841 | 3.266 |
| 150.78000 | 842 | 3.266 |
| 150.76000 | 843 | 3.272 |
| 150.78000 | 844 | 3.266 |
| 150.78000 | 845 | 3.266 |
| 150.78000 | 846 | 3.266 |
| 150.78000 | 847 | 3.278 |
| 150.79000 | 848 | 3.272 |
| 150.78000 | 849 | 3.278 |
| 150.78000 | 850 | 3.278 |
| 150.77000 | 851 | 3.278 |
| 150.78000 | 852 | 3.272 |
| 150.78000 | 853 | 3.266 |
| 150.78000 | 854 | 3.266 |
| 150.78000 | 855 | 3.272 |
| 150.76000 | 856 | 3.266 |
| 150.78000 | 857 | 3.278 |
| 150.78000 | 858 | 3.266 |
| 150.78000 | 859 | 3.266 |
| 150.78000 | 860 | 3.266 |
| 150.78000 | 861 | 3.266 |
| 150.78000 | 862 | 3.259 |
| 150.78000 | 863 | 3.266 |
| 150.78000 | 864 | 3.266 |
| 150.78000 | 865 | 3.272 |
| 150.78000 | 866 | 3.266 |
| 150.78000 | 867 | 3.266 |
| 150.78000 | 868 | 3.266 |
| 150.78000 | 869 | 3.266 |
| 150.78000 | 870 | 3.278 |
| 150.78000 | 871 | 3.266 |
| 150.78000 | 872 | 3.266 |
| 150.78000 | 873 | 3.266 |
| 150.78000 | 874 | 3.266 |
| 150.78000 | 875 | 3.266 |
| 150.79000 | 876 | 3.266 |
| 150.79000 | 877 | 3.266 |
| 150.78000 | 878 | 3.266 |

*Fig. 2e*

*Fig. 3*

Fig. 4

**REFERENCES CITED IN THE DESCRIPTION**

**Patent documents cited in the description**

- EP 0574051 A1
- WO 9904227 A1

- IT MO20060131 A